Europäisches Patentamt

European Patent Office

Office européen des brevets

(19)

(11) Veröffentlichungsnummer: **0 350 824**
**A2**

## (12) EUROPÄISCHE PATENTANMELDUNG

(21) Anmeldenummer: **89112548.6**

(22) Anmeldetag: **10.07.89**

(51) Int. Cl.⁴: **H01H 71/10 , H02H 3/06**

(30) Priorität: **15.07.88 DE 3824026**

(43) Veröffentlichungstag der Anmeldung:
**17.01.90 Patentblatt 90/03**

(84) Benannte Vertragsstaaten:
**AT BE CH DE FR GB IT LI**

(71) Anmelder: **Asea Brown Boveri**
**Aktiengesellschaft**
**Kallstadter Strasse 1**
**D-6800 Mannheim 31(DE)**

(72) Erfinder: **Runtsch, Erhard**
**Karlsbader Strasse 17**
**D-6944 Hemsbach(DE)**
Erfinder: **Velten, Walter**
**Carl-Goerdeler-Strasse 1**
**D-6830 Schwetzingen(DE)**
Erfinder: **Goehle, Rolf**
**Im Bubenwingert 16**
**D-6906 Leimen(DE)**
Erfinder: **Schmitt, Hermann**
**Im Vogelskorb 1**
**D-6803 Edingen-Neckarhausen(DE)**
Erfinder: **Greefe, Klaus**
**Hausserstrasse 55**
**D-6900 Heidelberg(DE)**
Erfinder: **Kymke, Dietmar**
**Maria-Probst-Strasse 15**
**D-6903 Neckargemünd(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Selektive Überstromschutzeinrichtung.**

(57) Selektiver Hauptsicherungsautomat

Bei bekannten selektiven Hauptsicherungsautomaten wird die Trennstelle im Hauptstrompfad periodisch geschlossen, wodurch bei einer Kurzschlußstromabschaltung in einem bestimmten Kurzschlußstrombereich daraus hohe Durchlaß-I²t-Werte resultieren.

Diesem Problem wird abgeholfen dadurch, daß nach erfolgter Begrenzung des ersten Kurzschlußimpulses die Rückschließung der Hauptkontaktstelle erst bei Nennbetriebsverhältnissen erfolgt und von einer in einem parallel zum Hauptstrompfad geschalteten Nebenstrompfad befindlichen Selektivitätseinrichtung (33) zeitgesteuert ist.

Bevorzugtes Anwendungsgebiet des neuen selektiven Hauptsicherungsautomaten sind Niederspannungsverteileranlagen, insbesondere Gebäudeinstallationen.

Fig. 1

## Selektive Überstromschutzeinrichtung

Die Erfindung betrifft ein Verfahren sowie eine Einrichtung zur Durchfuhrung des Verfahrens, zur selektiven Beherrschung von Überströmen in elektrischen Verbrauchernetzen, die mittels Hauptsicherungsautomaten abgesichert sind und jeweils nachgeschaltete einzeln abgesicherte Verbraucher aufweisen.

Diese Einrichtung ist ein selektiver Hauptsicherungsautomat, der zur selektiv gestaffelten Absicherung von einzeln abgesicherten Verbrauchern eines Verbrauchernetzes gegen Überströme in einem Verbraucherstromkreis selektiv gegenüber den übrigen Verbrauchern dient, und mit einem Hauptstrompfad sowie mit einem hierzu parallel geschalteten Nebenstrompfad, mit einer im Hauptstrompfad angeordneten Hauptkontaktstelle, die wenigstens ein festes und ein bewegliches Kontaktstück sowie eine zuge ordnete Lichtbogenlöscheinrichtung aufweist, mit einem ebenfalls im Hauptstrompfad angeordneten elektromagnetischen Schnellauslöser, der mit einem Hauptschaltwerk zusammenarbeitet, welches mit dem beweglichen Kontaktstück der Hauptkontaktstelle sowie mit einem Handschaltgriff und mit einem im Hauptstrompfad angeordneten Überstromauslöser in Wirkverbindung steht und das bewegliche Kontaktstück der Hauptkontaktstelle beaufschlagt, und mit je einer zugangsseitigen und einer abgangsseitigen Anschlußklemme ausgerüstet ist.

Unter Überstrom wird hierbei und im folgenden jeder Strom verstanden, der den festgelegten Nennstrom übersteigt. Insbesondere aber sind Kurzschlußströme gemeint, die ein Vielfaches der Nennstromstärke erreichen können und deren Beherrschung mit der vorliegenden Erfindung verfolgt wird.

Die vorgeordnete Absicherung von Verbrauchernetzen, welche einzeln abgesicherte Verbraucher aufweisen, wird heute noch oft durch Schmelzsicherungen (NH-Sicherungen) vorgesehen. Diese Art der Absicherung hat den Nachteil, daß bei Auftreten eines Kurzschlusses in einem Verbraucher bei nicht gegebener Selektivität durch Ansprechen der Hauptsicherung das gesamte Verbrauchernetz vom Versorgungsnetz getrennt wird, sowie ein Auswechseln der NH-Sicherung durch den Anwender nicht durchführbar ist.

Zur Vermeidung dieses Nachteiles wurden selektive Hauptsicherungsautomaten entwickelt, welche wie die zuvor erwähnten Schmelzsicherungen den einzeln abgesicherten Verbrauchern, die in Verbrauchernetzen zusammengefaßt sein können, vorgeschaltet sind und bei Auftreten eines Kurzschlußstromes in einem der Verbraucher ansprechen und die Strombegrenzung des dem Verbraucher zugeordneten Leitungsschutz-(LS)-Schalters unterstützen, jedoch nicht auslösen, falls der Kurzschluß von dem LS-Schalter selektiv abgeschaltet wird.

Ein derartiger selektiver Hauptsicherungsautomat ist aus der DE-PS 28 54 616 bekanntgeworden, bei dem der Kurzschlußstrom in einen hochohmigen Nebenstrompfad geführt wird, der sich parallel zu einem der beiden Hauptkontakte befindet, welche nach Überschreitung eines bestimmten Stromes von einer vom Kurzschlußstrom durchflossenen Spule aufgeschlagen werden.

Hat ein nachgeschalteter Leitungsschutzschalter den Kurzschlußstrom nicht abgeschaltet, so fließt der Kurzschlußstrom weiter. Wenn die Öffnungskraft der Schlagspule des elektromagnetischen Schnellauslösers im Bereich des Nulldurchgangs unter die Kontaktschließkräfte absinkt, erfolgt ein Wiederschließen der Kontakte, so daß ein weiteres Öffnen erst nach Überschreiten des Ansprechwertes der Schlagspule während der nächsten Halbwelle stattfinden kann.

Im Nebenstrompfad befindet sich ein empfindliches Thermobimetall, welches durch diesen iterativ wirksamen Kurzschlußstrom aufgeheizt wird und schließlich die endgültige Kontaktöffnung herbeiführt.

Obwohl mit Hilfe dieses selektiv wirksamen Hauptsicherungsautomaten die Nachteile der vorher üblichen Schmelzsicherungen vermieden werden, führt das mehrmalige Öffnen und Schließen der Hauptkontakte während einer Kurzschlußstromabschaltung in einem bestimmten Kurzschlußstrombereich zu höheren Durchlaß-$I^2t$-Werten.

Ausgehend vom vorstehend geschilderten Stand der Technik ist es Aufgabe der Erfindung ein Verfahren sowie als Schutzvorrichtung zur Durchführung des Verfahrens einen Hauptsicherungsautomaten anzugeben, mit dem die Nachteile im Stande der Technik, vermieden werden.

Das Verfahren, mit welchem die Aufgabe gelöst wird, ist erfindungsgemäß dadurch gekennzeichnet, daß bei Auftreten eines Kurzschlußstromes, der in einem dem Hauptsicherungsautomaten nachgeschalteten Verbrauchernetz verursacht ist, selbsttätig der Hauptstrompfad im Hauptsicherungsautomaten unterbrochen und der Kurzschlußstrom über einen hierzu parallel geschalteten Nebenstrompfad geleitet wird, daß hierauf eine Selektivitätseinrichtung erregt wird, die den Nebenstrompfad kurzzeitig unterbricht und nach einer vorgebbaren Zeit, während der der Kurzschlußstrom im betroffenen Verbrauchernetz vom zugeordneten LS-Schalter abgeschaltet ist, den Hauptstrompfad wieder schließt, daß aber bei weiterhin

2

anstehendem Kurzschlu die endgültige Unterbrechung des Hauptstrompfades sowie die Unterbrechung des Nebenstrompfades bewirkt wird und daß zur Wiedereinschaltung des Hauptsicherungsautomaten dieser manuell betätigt werden muß.

Zur Durchfuhrung des vorstehend gekennzeichneten Verfahrens ist ein selektiver Hauptsicherungsautomat entsprechend der eingangs genannten Art vorgesehen, der erfindungsgemäß dadurch gekennzeichnet ist, daß eine Rastvorrichtung vorgesehen ist, in der das infolge Kurzschlußstrom aufgeschlagene bewegliche Kontaktstück der Hauptkontaktstelle einrastet, daß der Nebenstrompfad, der an den Anschlußklemmen mit dem Hauptstrompfad verbunden ist, eine Selektivitätseinrichtung aufweist, die mit der Rastvorrichtung zusammenarbeitet, daß die durch einen Kurzschlußstrom ausgelöste Selektivitätseinrichtung die eine im Nebenstrompfad angeordnete Trennstelle beaufschlagt, zeitgesteuert den Nebenstrompfad öffnet und wieder schließt sowie die Entrastung des beweglichen Kontaktstückes der Hauptkontaktstelle hervorruft und daß zur sicheren Abschaltung eines weiterhin anstehenden Kurzschlußstromes die Selektivitätseinrichtung das Hauptschaltwerk beaufschlagt, welches die dauerhafte Öffnung der Hauptkontaktstelle sowie der im Nebenstrompfad angeordneten Trennstelle auslöst, wodurch das Verbrauchernetz vom Versorgungsnetz getrennt ist.

Als weiterhin anstehender Kurzschlußstrom wird hierbei ein solcher Kurzschlußstrom verstanden, der während der ersten Halbwelle mit seinem Auftreten noch nicht abgeschaltet ist, z. B. im 50 Hz-Netz > 10 ms.

In vorteilhafter Ausgestaltung der Erfindung ist vorgesehen, daß die Selektivitätseinrichtung aus einer im Nebenstrompfad eingeschalteten Spule gebildet ist, deren Anker eine Zeitsteuereinrichtung beaufschlagt, die ihrerseits mit einem Schaltschloß zusammenarbeitet, welches zur Lösung der Verrastung des beweglichen Kontaktstückes der Hauptkontaktstelle dient und sowohl mit der Trennstelle im Nebenstrompfad als auch mit dem Hauptschaltwerk in Wirkverbindung steht.

Die Spule der Selektivitätseinrichtung ist dabei als Spannungspule gestaltet, d. h. ihre Windungszahl ist so festgelegt, daß sie ähnlich einer Drosselspule einen hohen Widerstand ($\approx 1$ $\Omega$) bildet und erst bei einer Stromstärke, die oberhalb der Nennstromstärke liegt, für die der Hauptsicherungsautomat ausgelegt ist, erregt wird.

In Übereinstimmung mit bestehenden Vorschriften ist vorgesehen, daß die endgültige Trennung des Verbrauchernetzes vom Versorgungsnetz nur durch manuellen Eingriff, d. h. durch Betätigung des am Hauptsicherungsautomaten befindlichen Handschaltgriffes, aufgehoben werden kann.

Gemäß einer vorteilhaften Ausgestaltung der Erfindung ist vorgesehen, daß der erwähnte Handschaltgriff, der mit dem Hauptschaltwerk zusammenarbeitet, auch mit der Zeitverzögerungseinrichtung der Selektivitätseinrichtung gekoppelt ist.

Erfindungsgemäß ist die Rastvorrichtung als mechanische Fangvorrichtung für die beweglichen Teile der Hauptkontaktstelle ausgestaltet, welche die Kontakte in mindestens einer Position zwischen der "Ein"- und "Aus"-Stellung festhält.

Die "Aus"-Stellung des beweglichen Kontaktstückes der Hauptkontaktstelle wird nach der erfindungsgemäßen Ausgestaltung sowohl durch die Auslösung des Schalters aufgrund eines Kurzschlusses als auch mit Hilfe des Handschaltgriffes erreicht.

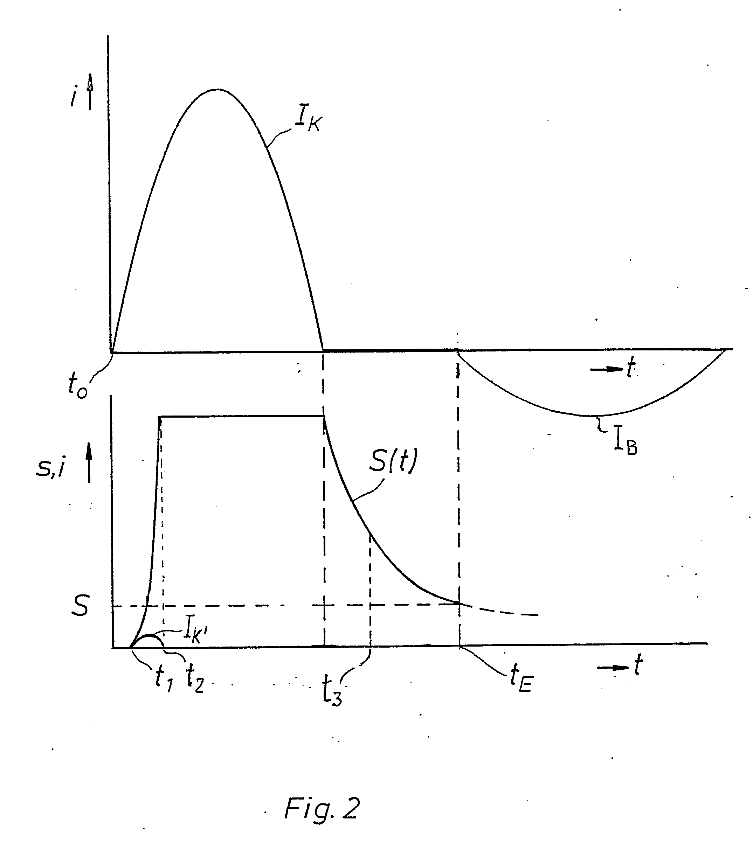

Die Zeitverzögerungseinrichtung der Selektivitätseinrichtung besitzt eine Energie/Zeit-Charakteristik entsprechend dem in Figur 2 gezeigten Kurvenverlauf s(t). Dabei ist vorgesehen, daß entsprechend der hochohmigen Auslegung der Erregerspule der Selektivitätseinrichtung diese erst bei Erreichen eines Stromwertes ausgelöst wird, der oberhalb der Nennstromstärke liegt. Mit der Auslösung der Zeitverzögerungseinrichtung durch den Anker der Erregerspule der Selektivitätseinrichtung erfolgt ein Speichervorgang mit sehr steilem Anstieg auf ein festgelegtes Niveau, welches eine für eine bestimmte Zeit, z. B. halbe Periode lang, gehalten wird. Danach folgt eine Entladung mit exponentiellem zeitlichem Verlauf.

Dieses Verhalten gilt dann, wenn der Kurzschlußstrom innerhalb der ersten Halbwelle abgeschaltet wird. während des Entladungsvorgangs erfolgt bei einer Zeit $t_3$ die Schließung der Trennstelle im Nebenstrompfad durch das mit der Zeitsteuereinrichtung gekoppelte Schaltschloß und das nachgeschaltete Netz ist wieder unter Spannung.

Nach einer vorgegebenen Zeit $t_E$ entsprechend dem zeitlichen Verlauf der Abklingkurve der Zeitsteuereinrichtung betätigt das mit ihr gekoppelte Schaltschloß eine Entrastungseinrichtung, wodurch die Entrastung der in der Rastvorrichtung gehaltenen beweglichen Kontaktstücke der Hauptkontaktstelle ausgelöst wird, so daß diese wieder schließen und der normale Betriebszustand wieder hergestellt ist.

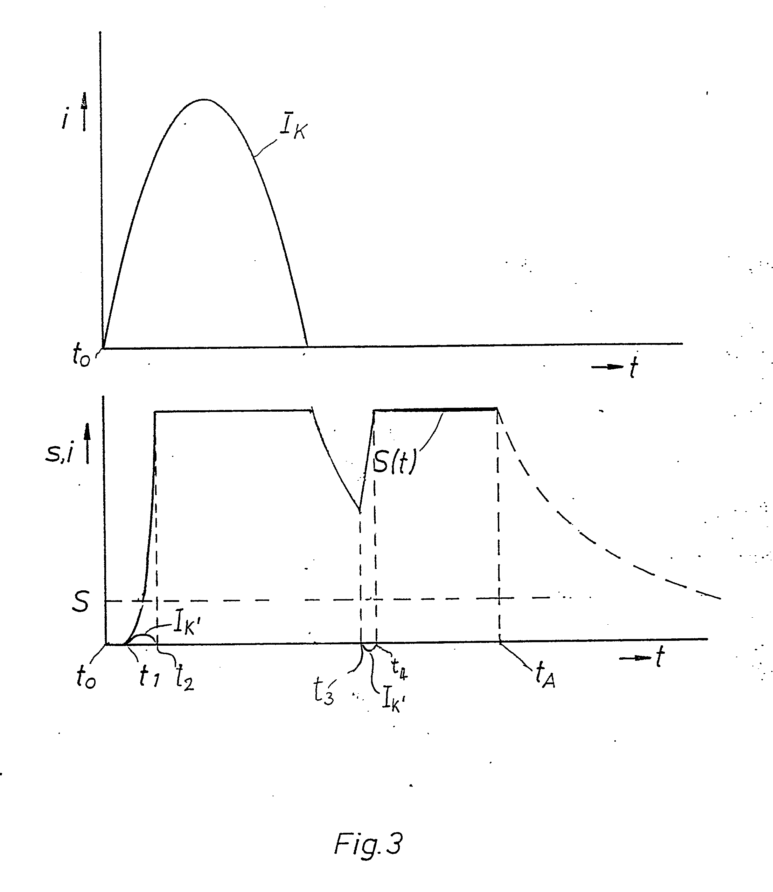

Ist der Kurzschluß nach der ersten Halbwelle noch nicht abgeschaltet, so erfolgt eine erneute Aktivierung der Zeitsteuereinrichtung während der zweiten Halbwelle durch vorübergehendes Schließen der Trennstelle im Nebenstrompfad zwischen $t_3$ und $t_4$. Hierdurch wird das Absinken ihrer Kennlinie unter das Auslöseniveau und damit das Schließen der Hauptkontaktstelle (Figur 3) verhindert.

Die Zeitsteuereinrichtung beaufschlagt über ein Schaltschloß das Hauptschaltwerk. Damit wird der Schalter in die "AUS"-Stellung gebracht; d. h. die Kontakte im Hauptstrompfad sowie die Trennstelle im Nebenstrompfad sind geöffnet.

In weiterer vorteilhafter Ausgestaltung der Erfindung ist vorgesehen, daß, insbesondere um eine gefahrlose Bedienung des Schalters beim Einschalten auf einen Kurzschlußstrom zu gewährleisten, die Hauptkontakte, wie bereits erwähnt, auch beim manuellen Einschalten von der Rastvorrichtung in einer Zwischenstellung gehalten werden und gleichzeitig der Trennkontakt im Nebenstrompfad geschlossen wird, so daß im ersten Augenblick nach dem Einschalten ein Stromfluß nur über den Nebenstrompfad nicht aber über die Hauptkontaktstelle erfolgt.

Für den Fall, daß ein Kurzschlußstrom einen vorgegebenen Wert übersteigt, der dem des selektiven Grenzkurzschlußstromes entspricht, soll gemäß der Erfindung die Auslösung unverzögert erfolgen. Hierzu dient der elektromagnetische Schnellauslöser, der im Hauptstrompfad zwischen der Hauptkontaktstelle und der abgangseitigen Anschlußklemme angeordnet ist. Dessen Anker, der als Klappanker an die Schlagspule des Schnellauslösers angegliedert ist und bei Überschreitung des kritischen Kurzschlußstromes auf das Hauptschaltwerk einwirkt, öffnet die Hauptkontaktstelle sowie auch die Kontaktstelle im Nebenstrompfad, wodurch die endgültige Abschaltung des Kurzschlußstromes sofort erfolgt.

Der besondere Vorteil der Erfindung besteht darin, daß die Kontakte der Hauptkontaktstelle geschont werden und der im Stand der Technik vorgesehene zusätzliche thermische Auslöser im Nebenstrompfad entfallen kann. Hierdurch ergibt sich ein wesentlich vereinfachter Aufbau der erfindungsgemäßen Anordnung.

Diese und weitere vorteilhafte Ausgestaltungen sind in den Unteransprüchen angegeben.

Anhand eines in der Zeichnung dargestellten Ausführungsbeispieles sollen die Erfindung, vorteilhafte Ausgestaltungen und besondere Vorteile der Erfindung näher erläutert und beschrieben werden.

Es zeigen:

Figur 1 Die Anordnung eines Selbstschalterkaskadennetzes,

Figur 2 ein Diagramm der zeitlichen Verläufe der Ströme im Haupt- bzw. Nebenstrompfad sowie der Zeitsteuereinrichtung bei einem Kurzschluß, der von einem LS-Schalter abgeschaltet wird,

Figur 3 das Diagramm der zeitlichen Verläufe der Ströme im Haupt- bzw. Nebenstrompfad sowie der Zeitsteuereinrichtung bei länger anstehendem Kurzschluß und dessen Abschaltung,

Figur 4 Prinzipschaltbild des erfindungsgemäßen Hauptsicherungsautomaten.

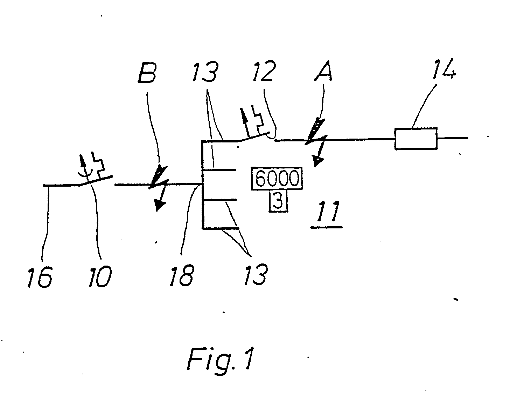

In Figur 1 ist die Anordnung eines Selbstschalterkaskadennetzes 11 mit einem Hauptsicherungsautomaten 10 sowie nachgeschalteten Leitungsschutzschaltern 12 gezeigt, welche zum Schutz gegen Überlast- und Kurzschlußströme zwischen Verbrauchern 14 und einem Versorgungsnetz 16 angeordnet sind. Dabei ist vorgesehen, daß mehrere Verbraucher 14 jeweils einzeln durch Leitungsschutzschalter 12 abgesichert sind und mehrere so gebildete Verbrauchernetze 13 in einem gemeinsamen Verzweigungspunkt 18 zusammengeführt sind, der über den Hauptsicherungsautomaten 10 mit dem Versorgungsnetz 16 verbunden ist.

In der in Figur 1 gezeigten Darstellung sind zwei mit den Buchstaben A und B bezeichnete Möglichkeiten für das Auftreten von Kurzschlußströmen dargestellt. Im ersten Fall, der mit dem Buchstaben A gekennzeichnet ist, tritt ein Kurzschluß in einem Verbraucher 14 auf, der durch einen Leitungsschutzschalter 12 abgesichert ist. Die übrigen Verbrauchernetze 13 befinden sich hierbei im Normalbetrieb, d. h., dort ist kein Kurzschluß.

Im zweiten Fall tritt ein Kurzschluß zwischen dem Verzweigungspunkt 18 und dem Hauptsicherungsautomaten 10 auf, der daraufhin anspricht und das gesamte Kaskadennetz 11 mit den Verbrauchern 14 vom Versorgungsnetz 16 trennt.

Unter Umständen ist es möglich, daß bei Auftreten eines Kurzschlußfalles A der zugeordnete Leitungsschutzschalter 12 nur verzögert anspricht, so daß der Hauptsicherungsautomat 10 anspricht und so, wie zuvor für den Kurzschlußfall B beschrieben, das gesamte Kaskadennetz 11 mit den Verbrauchern 14 vom Versorgungsnetz 16 abtrennt.

In Figur 2 ist der zeitliche Verlauf einer im erfindungsgemäßen Hauptsicherungsautomaten 10 verwendeten Zeitsteuereinrichtung mit den entsprechenden Stromverläufen dargestellt. Die Abszisse dient als Zeitachse, während auf der Ordinate das entsprechende Energieniveau aufgetragen ist. Für die aufgetragenen Ströme ist es die Stromstärke.

Mit $I_K$ ist der Kurzschlußstromverlauf im Hauptstrompfad und mit $I_K'$ der gedämpfte Kurzschlußstromverlauf im Nebenstrompfad dargestellt. $I_B$ zeigt den Betriebsstromverlauf. Mit s(t) ist der zeitliche Verlauf der Zeitsteuereinrichtung gekennzeichnet.

In Figur 3 ist ebenfalls der zeitliche Verlauf der Zeitsteuereinrichtung hier jedoch für einen länger anstehenden Kurzschlußstrom $I_K$ dargestellt. Die Bezeichnung der weiteren dargestellten Kurvenverläufe entspricht der in der Figur 2.

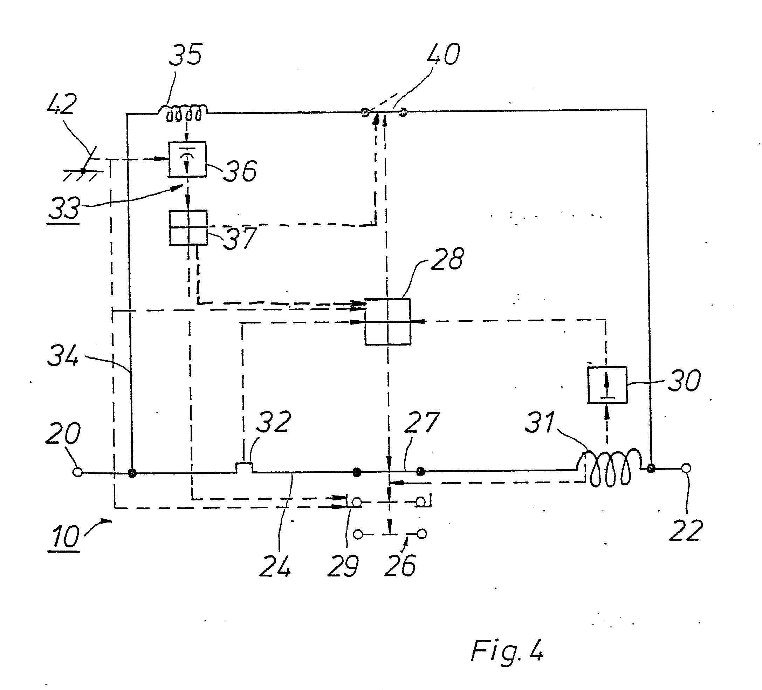

Bevor auf die Kurvendarstellung näher eingegangen werden soll, ist es zweckmäßig, den prinzipiellen Schaltungsaufbau des erfindungsgemäßen Hauptsicherungsautomaten 10 zu erläutern. Dieser Schaltungsaufbau ist in Figur 4 gezeigt.

Der Hauptsicherungsautomat 10, dessen Schaltungsaufbau in Figur 4 gezeigt ist, besitzt eine zugangsseitige Anschlußklemme 20 und eine abgangsseitige Anschlußklemme 22, welche von einem Hauptstrompfad 24 miteinander verbunden sind. In diesem Hauptstrompfad 24 ist eine Hauptkontaktstelle 26 angeordnet. Zur Betatigung der Hauptkontaktstelle 26 ist ein Hauptschaltwerk 28 vorgesehen, das von einem in Energieflußrichtung hinter der Hauptkontaktstelle 26 im Hauptstrompfad 24 angeordneten elektromagnetischen Schnellauslöser 30 beaufschlagbar ist. Die Magnetspule 31 des elektromagnetischen Schnellauslösers ist dabei zwischen der Hauptkontaktstelle 26 und der abgangseitigen Anschlußklemme 22 in den Hauptstrompfad 24 eingeschaltet.

In besonderer Ausgestaltung der Erfindung ist vorgesehen, daß ein hier nicht näher gezeigter in der Auslösespule 31 des elektromagnetischen Schnellauslösers 30 geführter Schlaganker unmittelbar auf die Hauptkontaktstelle 26 einwirkt.

Außerdem ist in den Hauptstrompfad 24 zwischen der zugangsseitigen Anschlußklemme 20 und der Hauptkontaktstelle 26 ein Überstromauslöser 32 angeordnet, der ebenfalls mit dem Hauptschaltwerk 28 zusammenarbeitet.

An den Anschlußklemmen 20, 22 ist ein zum Hauptstrompfad 24 elektrisch parallel geschalteter Nebenstrompfad 34 angeschlossen, in dessen Leitungsweg eine Spule 35 einer Zeitsteuerungseinrichtung 36 sowie eine weitere Kontaktstelle 40 angeordnet sind. Die weitere Kontaktstelle 40 steht in Wirkverbindung mit dem Hauptschaltwerk 28 und mit einem Schaltschloß 37.

Die Hauptkontaktstelle 26 besitzt ein bewegliches Kontaktstuck 27, welches in einer erfindungsgemäß vorgesehenen Rastvorrichtung 29 beim Öffnen durch die Auslösespule 31 in einer Position zwischen der Schließ- und der Offenstellung einrastet.

Mit der Rastvorrichtung 29 gekoppelt ist das Schaltschloß 37, das zur Zeitsteuereinrichtung 36 gehort und von dieser betätigt wird. Das Schaltschloß 37 dient hierbei u. a. zur Entrastung des beweglichen Kontaktstückes 27.

Um auch die manuelle Betätigung des erfindungsgemäßen Hauptsicherungsautomaten 10 sicherzustellen, ist ein Handschaltgriff 42 vorgesehen, der in Wirkverbindung mit dem Hauptschaltwerk 28 sowie mit der Zeitsteuereinrichtung 36 und der Rastvorrichtung 29 steht.

Nun soll die Funktion des Hauptsicherungsautomaten 10 unter Bezugnahme auf die Figuren 2 bzw. 3 sowie 4 erläutert werden.

Im Nennbetrieb fließt der Betriebsstrom $I_B$ von der zugangsseitigen Anschlußklemme 20, die mit dem Versorgungsnetz 16 verbunden ist, über dem Hauptstrompfad 24 zur abgangseitigen Anschlußklemme 22, an welche die einzelnen Verbrauchernetze 13 anschließen. Hierbei ist die Hauptkontaktstelle 26 geschlossen. Bei Auftreten t0 eines Kurzschlußstromes $I_K$, der, wie in Figur 1 angedeutet, sowohl in einem Verbraucher 14 als auch zwischen dem Hauptsicherungsautomaten und dem gemeinsamen Verzweigungspunkt 18, von dem die Verbrauchernetze 13 gespeist werden, vorliegen kann, wird die Auslösespule 31 des elektromagnetischen Schnellauslösers 30 erregt, wodurch unmittelbar die Hauptkontaktstelle 26 geöffnet wird und das bewegliche Kontaktstück 27 bei seiner Öffnungsbewegung in der Rastvorrichtung 29 einrastet. Damit ist der Hauptstrompfad 24 unterbrochen.

Der gedämpfte Kurzschlußstrom, der in den Figuren 2 und 3 mit $I_K'$ gekennzeichnet ist, fließt durch den hochohmigen Nebenstrompfad 34, der aus der elektrischen Reihenschaltung der als Spannungsspule ausgelegten Spule 35 des Zeitsteuerungsgliedes 36 sowie der Kontaktstelle 40 aufgebaut ist.

Das Auslöseverhalten der Spule 35 der Zeitsteuereinrichtung 36 ist durch den Kurvenverlauf s (t) in den Figuren 2 und 3 wie folgt gekennzeichnet:

Ein infolge Kurzschluß in den Nebenstrompfad 34 geleiteter Kurzschlußstrom $I_K$, beginnt bei $t_1$ die erste Halbwelle, die einem Maximalwert zustrebt. Bei Erreichen des Ansprechwertes wird demgemäß durch Erregung der Spule 35 die Zeitsteuereinrichtung 36 aktiviert und mit steilem Anstieg auf ein vorgegebenes Energienieveau gebracht, das bei $t_2$ erreicht wird. Mit Erreichen dieses Energienieveaus wird von der Zeitsteuereinrichtung 36 über das Schaltschloß 37 die im Nebenstrompfad 34 angeordnete Trennstelle 40 geöffnet und der gedämpfte Kurzschlußstrom $I_K$, abgeschaltet.

Das Energienieveau wird für eine vorgegebenen Zeit, z. B. eine halbe Periode, gehalten. Danach wird ein Entladungsvorgang der Zeitsteuerung 36 eingeleitet, der eine exponentiellen Verlauf hat und der in der Kurvendarstellung in Figur 2 als durchgezogene abfallende Linie dargestellt ist. Bei $t_3$, d. h., bevor der Entladungsvorgang der Zeitsteuereinrichtung 36 beendet ist, wird die Trennstelle 40 wieder geschlossen, und das an den Hauptsicherungsautomaten angeschlossene Kaskadennetz führt wieder Spannung. Bei $t_E$ schließlich erfolgt die Entrastung des beweglichen Kontaktstückes 27 der Hauptkontaktstelle 26, die dann geschlossen ist.

Dieser zeitliche Verlauf gilt, sofern der Kurzschlußstrom innerhalb der ersten Halbwelle durch den dem Hauptsicherungsautomaten nachgeschalteten Leitungsschutzschalter des kurzschlußführenden Verbrauchernetzes 13 abgeschaltet ist.

In Figur 3 ist der Fall dargestellt, daß der Kurzschlußstrom nach der ersten Halbwelle noch nicht abgeschaltet ist. Daher wird mit der zweiten Halbwelle, die bei $t_3$ beginnt und ähnlich dem zeitlichen Verlauf der ersten Halbwelle bei $t_4$ endet, der Entladevorgang der Zeitsteuereinrichtung gestoppt, weil durch den anstehenden Kurzschlußstrom $I_K'$ die Zeitsteuereinrichtung 36 von der Spule 35 bei $t_3$ erneut aktiviert wird und so das Auslöseniveau s für das Schaltschloß 37 nicht erreicht wird, die Trennstelle 40 bei $t_4$ erneut öffnet und die Entrastung des beweglichen Kontaktstücks 27 verhindert. Demgemäß bleibt das bewegliche Kontaktstück 27 der Hauptkontaktstelle 26 in der Rastvorrichtung 29 gefangen, und die Hauptkontaktstelle 26 geöffnet.

Der abermalige Impuls infolge der erneuten Aktivierung der Zeitsteuereinrichtung 36, der zur Beaufschlagung des Schaltschlosses 37 führt, hat nun im weiteren die Beaufschlagung des Hauptschaltwerkes 28 zur Folge, wodurch die Hauptkontakte der Hauptkontaktstelle 26 in ihre endgültige "Aus"-Stellung gebracht werden. Die Trennstelle 40 im Nebenstrompfad wird auf wenigstens 6 mm geöffnet, um so die Trennbedingung zu erfüllen. Damit ist die endgültige Abschaltung des angeschlossenen Kaskadennetzes herbeigeführt, was dem Punkt $t_A$ auf der Zeitachse entspricht.

Für den Fall, daß der Kurzschlußstrom von Anfang an einen vorgegebenen maximalen Wert übersteigt, muß die unverzögerte Ausschaltung sichergestellt sein. Dies wird mit Hilfe des elektromagnetischen Schnellauslösers gewährleistet, der mit dem Hauptschaltwerk 28 zusammenarbeitet. Bei Beaufschlagung des Hauptschaltwerkes durch den elektromagnetischen Schnellauslöser 30 erfolgt umgehend die Öffnung der Hauptkontaktstelle 26 sowie der zweiten Kontaktstelle 40 im Nebenstrompfad und somit die Abschaltung des Hauptsicherungsautomaten 10.

Um beim manuellen Einschalten des Hauptsicherungsautomaten bei beliebigen Kurzschlußströmen dem betriebsmäßigen Abschalten des Gerätes von Kurzschlußströmen zu entsprechen, ist das bewegliche Kontaktstück 27 der Hauptkontaktstelle 26, wie bereits erwähnt, in der Rastvorrichtung 29 gehalten. Bei Betätigung des Handschaltgriffes 42 wird zunächst die weitere Kontaktstelle 40 im Nebenstrompfad 34 geschlossen, während die Hauptkontaktstelle 26 weiterhin geöffnet bleibt, so daß es nicht zu einem Stromfluß über die Hauptkontaktstelle 26 im ersten Augenblick des Einschaltens kommen kann, sondern nur über den Nebenstrompfad ein Stromfluß zustande kommt.

Beim Einschalten sind drei unterschiedliche Betriebsfalle zu berücksichtigen. Hierbei ist davon auszugehen, daß die beiden Kontaktstellen 26, 40 jeweils geöffnet sind.

### 1. Einschalten auf Nennbetrieb

Soll der Hauptsicherungsautomat 10 auf Nennbetrieb eingeschaltet werden, d. h. mit eingeschalteten Verbrauchern 14, erfolgt die Entrastung der Rastvorrichtung 29 ebenfalls durch das Schaltschloß 37. Ihre Aktivierung erfolgt entsprechend dem vorstehend beschriebenen zeitlichen Verlauf der Zeitsteuereinrichtung 36, die unmittelbar von dem Handschaltgriff 42 beaufschlagt wird.

### 2. Einschalten auf Leerlauf

Beim Einschalten des Hauptsicherungsautomaten 10 auf Leerlauf, d. h. bei abgeschaltetem Verbrauchern 14, ist ebenfalls die manuelle Aktivierung der Zeitsteuereinrichtung 36 durch Betätigung des Handschaltgriffes 42 vorgesehen, wobei hier ebenso wie beim Einschalten auf Last zunächst der Nebenstrompfad 34 eingeschaltet und dann mit entsprechender zeitlicher Verzögerung die Schließung des Hauptstrompfades 24 freigegeben ist.

### 3. Einschalten auf Kurzschlußstrom

Entsprechend dem zuvor beschriebenen Einschaltverlauf beim manuellen Einschalten des Hauptsicherungsautomaten ist ersichtlich, daß ein Stromfluß zunächst nur im Nebenstrompfad 34 zustande kommt, d. h., der Hauptstrompfad 24 ist aufgrund der geöffneten Hauptkontaktstelle 26 unterbrochen. Der weitere Verlauf des Einschaltvorganges entspricht dem bei der Kurzschlußstromabschaltung.

Die Spule 35 aktiviert die Zeitsteuereinrichtung 36, die entsprechend ihrer Kennlinie zunächst ihr erreichtes Energieniveau hält. Wird der Kurzschlußstrom im folgenden von einem nachgeschalteten Leitungsschutzschalter abgeschaltet, so erfolgt zunächst die Schließung der Trennstelle 40 im Nebenstrompfad und dann die Entrastung des beweglichen Kontaktstückes 27 der Hauptkontaktstelle 26 durch das Schaltschloß 37, wie zuvor geschildert.

Ist der Kurzschlußstrom nach Ablauf des Zeitintervalls nicht abgeschaltet worden, so wird das Zeitsteuerelement 36 erneut von der Spule 35 aktiviert und erreicht wieder das ursprüngliche Energieniveau, so daß eine Schließung der Hauptkontaktstelle 26 unterbleibt und stattdessen die Beaufschlagung des Hauptschaltwerkes 28 erfolgt. Dieses führt, wie zuvor beschrieben, die endgültige Abschaltung des Hauptsicherungsautomaten herbei.

### Ansprüche

1. Verfahren zur selektiven Abschaltung von Überströmen in elektrischen Verteilernetzen, die jeweils einzeln abgesicherte Verbraucher (14) aufweisen und mittels Hauptsicherungsautomaten (10) abgesichert sind, welche einen Hauptstrompfad (24) mit mindestens einer Hauptkontaktstelle (26) und einen hierzu elektrisch parallel geschalteten Nebenstrompfad (34) aufweisen, dadurch gekennzeichnet, daß bei Auftreten eines Kurzschlußstromes, der in einem dem Hauptsicherungsautomaten (10) nachgeschalteten Verbrauchernetz (13) verursacht ist, selbsttätig der Hauptstrompfad (24) des Hauptsicherungsautomaten (10) unterbrochen und offengehalten und der Kurzschlußstrom über einen hierzu parallel geschalteten Nebenstrompfad (34) geleitet wird, daß hierauf eine Selektivitätseinrichtung (33) erregt wird, die periodisch den Nebenstrompfad (34) unterbricht und nach einer vorgebbaren Zeit, während der der Kurzschlußstrom im betroffenen Verbrauchernetz vom zugeordneten LS-Schalter (12) abgeschaltet ist, den Hauptstrompfad (24) netzspannungsunabhängig wieder schließt, daß aber bei weiterhin anstehendem Kurzschluß die endgultige Unterbrechung des Hauptstrompfades (24) sowie des Nebenstrompfades (34) bewirkt wird und daß zur Wiedereinschaltung des Hauptsicherungsautomaten (10) dieser manuell betätigt werden muß.

2. Selektiver Hauptsicherungsautomat (10) zur Durchfuhrung des Verfahrens nach Anspruch 1, der zur selektiv gestaffelten Absicherung von einzeln abgesicherten Verbrauchern (14) eines Verbrauchernetzes (13) gegen Überströme in einem Verbrauchernetz (13) selektiv gegenüber den übrigen Verbrauchernetzen (13) dient, mit einem Hauptstrompfad (24) und mit einem hierzu parallel geschalteten Nebenstrompfad (34), mit einer im Hauptstrompfad (24) angeordneten Hauptkontaktstelle (26), die wenigstens ein festes und ein bewegliches Kontaktstück (27) sowie mindestens eine zugeordnete Lichtbogenlöscheinrichtung aufweist, mit einem ebenfalls im Hauptstrompfad (24) angeordneten elektromagnetischen Schnellauslöser (31), der mit einem Hauptschaltwerk (28) zusammenarbeitet, welches mit dem beweglichen Kontaktstück (27) der Hauptkontaktstelle (26) verbunden ist sowie mit einem Handschaltgriff (42) und einem im Hauptstrompfad (24) angeordneten Überstromauslöser (32) in Wirkverbindung steht, und mit je einer zugangsseitigen und einer abgangsseitigen Anschlußklemme (20, 22), dadurch gekennzeichnet, daß eine Rastvorrichtung (29) vorgesehen ist, in der das infolge Kurzschluß aufgeschlagene bewegliche Kontaktstück (27) der Hauptkontaktstelle (26) einrastet, daß der Nebenstrompfad (34), der an den Anschlußklemmen (20, 22) mit dem Hauptstrompfad (24) verbunden ist, eine Selektivitätseinrichtung (33) aufweist, die mit der Rastvorrichtung (29) zusammenarbeitet, daß die durch einen Kurzschlußstrom erregte Selektivitätseinrichtung (33) eine im Nebenstrompfad (34) angeordnete Trennstelle (40) beaufschlagt und dadurch den Nebenstrompfad unterbricht, daß sie zeitgesteuert den Nebenstrompfad (34) wieder schließt sowie die Entrastung des beweglichen Kontaktstückes (27) der Hauptkontaktstelle (26) hervorruft und daß zur sicheren Abschaltung eines weiterhin anstehenden Kurzschlußstromes die Selektivitätseinrichtung (33) das Hauptschaltwerk (28) beaufschlagt, welches selbsttätig die Offnung der im Nebenstrompfad (34) angeordneten Trennstelle (40) sowie die dauerhafte Öffnung des Kontaktstückes (27) der Hauptkontaktstelle (26) bis in die "Aus"-Stellung herbeiführt, wodurch das Verbrauchernetz (13) vom Versorgungsnetz (16) getrennt ist.

3. Hauptsicherungsautomat nach Anspruch 2, dadurch gekennzeichnet, daß die Selektivitätseinrichtung (33) eine Zeitsteuereinrichtung (36) und eine mit ihr zusammenarbeitende, im Nebenstrompfad (34) angeordnete Spule (35) enthält, daß die Zeitsteuereinrichtung (36) auf ein Schaltschloß (37) wirkt, welche seinerseits die Entrastung des beweglichen Kontaktstückes (27) der Hauptkontaktstelle (26) aus der Rastvorrichtung (29) herbeiführt, wobei die Spule (35) in Stromflußrichtung zwischen dem Abzweigpunkt (20) im Hauptstrompfad (24) und der Trennstelle (40) im Nebenstrompfad (34) angeordnet ist.

4. Hauptsicherungsautomat nach einem der Ansprüche 2 oder 3, dadurch gekennzeichnet, daß die Trennstelle (40) im Nebenstrompfad (34) mit dem Schaltschloß (37) und dem Hauptschaltwerk (28) in Wirkverbindung steht.

5. Hauptsicherungsautomat nach einem der Ansprüche 2 oder 3, dadurch gekennzeichnet, daß zur manuellen Einschaltbetätigung der Selektivitätseinrichtung (33) der Handschaltgriff (42) mit der Zeitsteuereinrichtung (36) gekoppelt ist.

6. Hauptsicherungsautomat nach einem der Ansprüche 2 oder 3, dadurch gekennzeichnet, daß die Spule (35) der Selektivitätseinrichtung (33) als Spannungsspule ausgelegt ist, welche erst bei höheren Stromstärken als der festgelegten Nennstromstärke eine Erregung erfährt, welche zur Betätigung der Zeitsteuereinrichtung (36) führt.

7. Hauptsicherungsautomat nach einem der Ansprüche 2, 3, 5 oder 6, dadurch gekennzeichnet, daß die Selektivitätseinrichtung (33) eine mechanisch arbeitende Zeitsteuereinrichtung (36) aufweist oder eine Zeitsteuereinrichtung (36) aufweist, die aus elektronischen Bauelementen gebildet ist.

8. Verfahren nach Anspruch 1, dadurch gekennzeichnet, daß bei manueller Einschaltung des Hauptsicherungsautomaten (10) zunächst die Trennstelle (40) im Nebenstrompfad (34) geschlossen wird. sowie das bewegliche Kontaktstück (27) der Hauptkontaktstelle (26) in der Rastvorrichtung (29) gehalten wird, und daß dann die Selektivitätseinrichtung (33) mit Hilfe des Handschaltgriffes (42) beaufschlagt wird, so daß die Schließung der Hauptkontaktstelle (26) verzögert erfolgt.

9. Verfahren nach Anspruch 8, dadurch gekennzeichnet, daß die Aktivierung der Selektivitätseinrichtung (33) durch ihre Spule (35) erst bei einer Stromstärke erfolgt, die höher liegt als die Nennstromstärke.

10. Verfahren nach einem der Ansprüche 1, 8 oder 9, dadurch gekennzeichnet, daß bei Auslösung durch den elektromagnetischen Schnellauslöser (30) sowohl die Hauptkontaktstelle (26) im Hauptstrompfad (24) als auch die Nebenkontaktstelle (40) im Nebenstrompfad (34) vom Schaltwerk (28) umgehend und unabhängig von der Selektivitätseinrichtung (33) dauerhaft geöffnet werden.

Fig. 1

Fig. 2

Fig.3

Fig. 4